# EUROPEAN PATENT APPLICATION

(11) **EP 2 383 646 A1**
(43) Date of publication of application: **02.11.2011**
(21) Application number: 10305453.2
(22) Date of filing: 29.04.2010
(51) Int. Cl.: G06F 9/445

(54) **A method of network provisioning, corresponding computer program product, and data storage device therefor**

(71) Applicant: Alcatel Lucent, 75008 Paris (FR)
(72) Inventor: Parladori, Giorgio, 20129, Milan (IT); Donadio, Pasquale, 80129, Napoli (IT)
(74) Representative: Brose, Gerhard

(57) **Abstract**

The invention concerns a method of network provisioning, the method comprising the steps of dynamically allocating (101) a first processing element of a computer network; interconnecting (102) the first processing element- with a second processing element of the computer network; sharing (103) a resource between the first processing element and the second processing element; based an the first processing element and the second processing element, composing (104) a network element; in response to a network operator requesting (105) a service, deploying the service on the network element; and operating (106) the service. The invention further concerns a computer program product and a device therefor,

## Description

### Field of the Invention

The invention relates to a method of network provisioning comprising the steps of allocating a first processing element of a computer network; interconnecting the first processing element with a second processing element of the computer network; sharing a resource between the first processing element and the second processing element; based on the first processing element and the second processing element, composing a network element; in response to a network operator requesting a service, deploying the service on the network element; and operating the service. The invention further relates to a computer program product comprising computer-executable instructions for performing said method when the program is run on a computer, and to a device programmed or configured to perform said method.

### Background

In telecommunications, by network provisioning, sometimes called service mediation, is meant the provisioning of a customer's service to one or more network elements, enabling the service and ultimately allowing the customer to actually use the service. During this provisioning, the service mediation device translates the service and the corresponding parameters of the service to one or more services or parameters on the network elements involved. The algorithm used to translate a system service into network services is called provisioning logic.

In this context, in accordance with the united States communications Act, Pub. LA. No. 104-104, 110 Start. 56 (1996), by network element is meant any facility or equipment used in the provision of a telecommunications service. Typically, a network element is a manageable logical entity uniting one or more physical devices, thus allowing the potentially distributed devices to be managed in a unified way using a single management system. The term may also refer to features, functions, and capabilities that are provided by means of such facility or equipment, including subscriber numbers, databases, signaling systems, and information sufficient for billing and collection or used in the transmission, routing, or other provision of a telecommunications service.

Jiang Dejun, Guillaume Pierre, and Chi-Hung Chi outline an approach to network provisioning in "Autonomous Resource Provisioning for Multi-Service Web Applications", Proceedings of the 19th International World-Wide Web conference, Raleigh, NC, USA, April 2010. In this paper, the authors propose to assign a service-level agreement (SLA) to a front-end service while not giving any particular response time objectives to other services. According to this proposal, services are autonomously responsible for their own provisioning operations and collaboratively negotiate performance objectives with each other. The authors demonstrate through extensive experiments that their system can add, remove, and shift both servers and caches within an entire multi-service application under varying workloads to meet the SLA target and improve resource utilization.

However, a major downside of this known system is its interent dependency on static processing elements.

It is an objective of the invention to present an improved approach to network provisioning characterized by a high degree of flexibility. In particular, the objective solution should allow for an upgrade of the provisioned network in terms of its capacity or structure without relying on the replacement of individual processing elements. As commonly used in computing, by upgrade is meant a replacement of the processing element's hardware, software, or firmware with a newer or better version, in order to bring the network up to date or to improve its characteristics.

In this context, a processing element, sometimes called a network, processor, typically comprises an integrated circuit (IC) which has a feature set specifically targeted at the networking application domain, such as a software-programmable device possessing generic characteristics similar to a general-purpose central processing unit (CPU) as is commonly used in many different types of equipment and products. The intrinsic 1C of the processing element is adapted to deal with packet data, for example, by means of a specific feature or architecture provided to enhance and optimize packet processing within a computer network. In accordance with the term's use in information technology, by packet is meant any formatted, suitably-sized block unit of data - irrespective of content, type, or structure - carried by the computer network.

The objective described above is achieved by a method of network provisioning comprising the steps of dynamically allocating a first processing element of a computer network; interconnecting the first processing element with a second processing element of the computer network; sharing a resource between the first processing element and the second processing element; based on the first processing element and the second processing element, composing a network element; in response to a network operator requesting a service, deploying the service on the net-work element; and operating the service. The objective further is achieved by a computer program product comprising computer-executable instructions for performing said method when the program is run on a computer, or by a device programmed or configured to perform said method.

A main idea of the invention is to allocate the involved processing elements dynamically, allowing their use in the composition of a network element.

Further developments of the invention can be gathered from the dependent claims and the following description.

In the following the invention will be explained further masking reference to the attached drawing.

To provision a computer network according to an embodiment of the invention, a first processing element of the computer network is allocated dynamically and interconnected with a second processing element of that computer network, allowing a resource to be shared among both processing elements. Subsequently, a network element is composed based on these processing element. The resulting network element is used to host a service to be deployed on request by a network operator, and to operate that service accordingly.

### Brief Description of the Figures

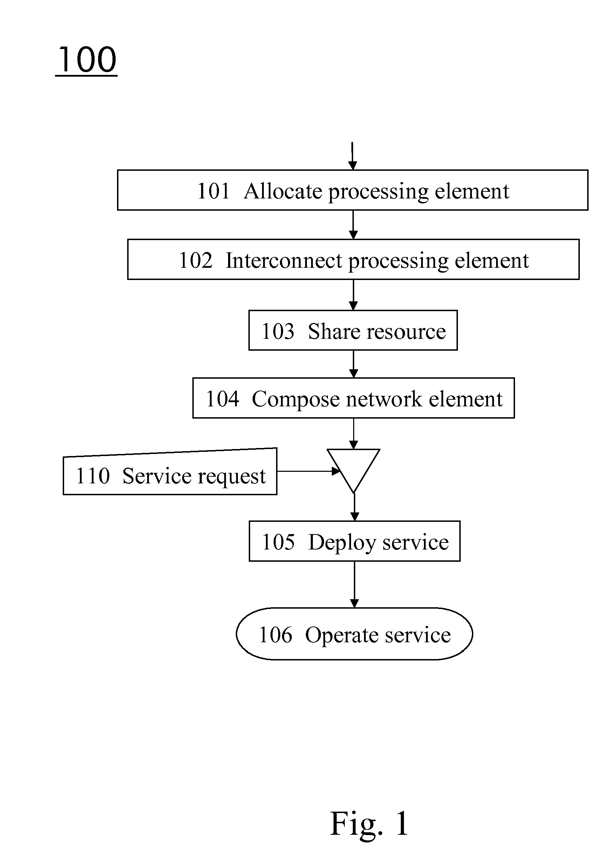

Fig. 1 shows a flowchart depicting a method according to an embodiment of the invention.

### Description of the Embodiments

In the following, a method according to the invention is elucidated by way of example, referencing Fig. 1.

The flowchart 100 of Fig. 1 comprises a first processing step 101, a second processing step 102, a third processing step 103, a fourth processing step 104, and a fifth processing step 105. The flowchart 100 further comprises a terminator 106, represented by a rounded rectangle. A set of arrows represent the flow of control passing through the processing steps 101 to 104, merging with manual input 110, and finally passing through the fifth processing step 105 into the terminator 106. Within this flow, an arrow starting at a first symbol and ending at a second symbol indicates that control passes from the first symbol to the second symbol.

In the embodiment at hand, the method is applied by an operating system (OS). In computing, an OS is a piece of software that provides an interface between a processing element and other software. The OS is responsible, for management and coordination of processes and allocation and sharing of hardware resources such as random access memory (RAM) and disk space, and acts as a host for services running on these resources. The OS also provides orderly access to the hardware by competing software routines, thus relieving application programmers from having to manage these details.

To allow for simplified use and integration, the OS offers a number of services to application programs. Applications acccess these services through application programming interfaces (APIs) or system calls. By invoking these interfaces, the application can request a service from the OS, pass parameters, and eventually receive the results of the operation. The OS also provides an operator interface for use by a network operator, that is, an interface by which a network element is accessed or controlled, In an alternative embodiment, the operator interface, instead of being integrated with the OS, may take the form of complementary software.

In the first processing step 101, the OS dynamically allocates a first processing element. The processing element may take the form of, inter alia, a router, switch, firewall, intrusion detection or prevention device, or network monitoring system. To speed up the processing of packet data, the processing element supports functions such as pattern matching, address lookup, computation, data bit-field manipulation, queue management, control processing, and packet recirculation. For an increased data rate, the processing element is based on an architectural paradigm such as processor pipelining, parallel processing including multithreading, or specialized micro-coding.

Independently of its specific features, the first processing element is part of a computer network. In this context, a computer network, often simply referred to as a network, is any collection of network elements connected by channels that facilitate communications among these elements.

In the second processing step 102, the OS interconnectects the first processing element allocated in the first processing step 101 with a second processing element of the computer network.

In the third processing step 103, the OS shares a resource between the first processing element of the first processing step 101 and the second processing element of the second processing step 102. In accordance with the term's use in computing, the shared resource, sometimes called network share, is a device or piece of information associated, with the first processing element that can be remotely accessed by the second processing element as if it were a local resource of the second processing element, or vice versa. Examples include shared file access, also known as disk sharing or folder sharing, shared printer access, also known as printer sharing, or shared scanner access. Depending on the type of resource shared, it may also be referred to, inter alia, as a shared disk, mounted disk, shared drive volume, shared folder, shared file, shared document, shared printer, or shared scanner.

To this end, the OS virtualizes the resource, that is, it hides the physical characteristics of the resource from the network operator, instead showing an abstract computing platform.

In the fourth processing step 104, the OS composes; a network element based en the first processing element of the first processing- step 101 and the second processing element of the second processing step 102. More specifically, to allow for the combination of multiple processing elements from different administrative domains for a common goal, the OS combines these and any further processing elements involved to form a grid. This distributed computing technique is commonly known in the art as grid computing. As a further benefit, the forming of a grid allows using the computer network to solve scientific, technical, or business problems that require a great number of computer processing cycles or involve large amounts of data.

As manual input 110, the OS receives from a network operator a request tor a service. In accordance with the Organization for the Advancement of Structured Information Standards (OASIS) Reference Model for Service oriented Architecture 1.0, by service is meant any mechanism to enable access to one or more capabilities of the computer network, where the access is provided using a prescribed interface and is exercised consistently with constraints and policies as specified by the network operator. In the context of enterprise architecture, service orientation, and service-oriented architecture, the term typically refers to a set of related software functionality, together with the policies that should govern its usage.

Policies under which the service is to operate may comprise, inter alia, its required bandwidth, storage, or calculation capacity as well as envisaged power consumption. To reflect these constraints, the OS configures the grid accordingly.

Examples of services that are typically executed on processing elements include packet or frame discrimination and forwarding, quality of service (QoS) enforcement, access control, encryption of data streams, or Transmission Control Protocol (TCP) offload processing. For instance, the execution of a routing or switching service would cause the network element to relay packets to a different network segment of the computer network. Here, by network segment is meant a portion of the computer network wherein every processing element communicates using the same physical layer (PHY), that is, the first and lowest layer in the seven-layer Open System Interconnection Reference Model (OSI Reference Model or OSI Model) of computer networking.

In the fifth processing step 105, responding to the service request received as manual input 110, the OS deploys the service on the network element composed in the fourth processing step 104. According to the term's meaning in the art of software engineering, deployment is meant to include all of the activities that make the service available for use. Such activities may comprise, inter alia, the transfer of associated software code to the network element as well as the installation and activation of any executable components of such Deployment of the service may also entail a reconfiguration of the network element by the OS according to the requirements of the service as specified by the network operator,

Finally, upon reaching the terminator 106, the OS operates the service deployed in the fifth processing step 105, To this and, the OS includes middleware to apportion pieces of a computer program implementing the service among several processing elements of the grid formed in the fourth processing step 104. Operating the service thus involves computation in a distributed fashion, that is, by means of multiple autonomous processing elements that communicate through the computer network. To this end, operating the service may require dividing the underlying problem into many tasks, each of which the OS assigns to a different processing element. Within the field of distributed computing, the computer program is accordingly labeled a distributed program, and the process of writing such program is called distributed programming.

A person of skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital data storage media. The embodiments are also intended to cover computers programmed to perform said steps of methods described herein.

The present inventions may be embodied in other specific apparatus and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The description and drawing merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles; aspects, and embodiments of the invention, as well as specific examples thereof, are intended to encompass equivalents thereof,

## Claims

1. A method of network provisioning, the method, comprising the steps of
dynamically allocating (101) a first processing element of a computer network,
interconnecting (102) the first processing element with a second processing element of the computer network,
sharing (103) a resource between the first processing element and the second processing element,
based on the first processing element and the second processing element, composing (104) a network element,
in response toy network operator requesting (110) a service, deploying (105) the service on the network element, and
operating (106) the service.

2. A method according to claim 1, **characterized in that** the method comprises the further step of,
in order to share (103) the resource, virtualizing the resource.

3. A method according to claim 1 or 2, **characterized in that** the method comprises the further step of,
based on requirements of the service, reconfiguring the network element.

4. A method according to any of the preceding claims, **characterized in that** the computer network comprises a plurality of network segments, the service comprises forwarding a packet, and the method comprises the further step of
relaying the packet from a network segment to a further network segment by means of the network element.

5. A method, according to any of the preceding claims, **characterized in that** the computer network comprises a third processing element and the method comprises the further step of
combining the first processing element, the second processing element, and the third processing element to form a grid,
wherein the grid comprises the network element.

6. A method according to claim 5, **characterized in that** the method comprises the further step of configuring the grid based on at least, one of the following:
a bandwidth required by the service,
a storage capacity required by the service,
a calculating capacity required by the service, and
a power consumption of the service.

7. A computer program product comprising computer-executable instructions for performing a method when the program is run on a computer, the method comprising the steps of
dynamically allocating (101) a first processing element,
interconnecting (102) the first processing element with a second processing element,
sharing (103) a resource between the first processing element and the second processing element,
based on the first processing elements and the second processing element, composing (104) a network element,
in response to a network operator requesting (110) a service, deploying (105) the service on the network element, and
operating (106) the service.

8. A computer program product according to claim 7, **characterized in that** the computer program product comprises an operating system.

9. A device programmed or configured to perform a method comprising the steps of
dynamically allocating (101) a first processing element,
interconnecting (102) the first processing element with a second processing element,
sharing (103) a resource between the first processing element and the second processing element,
based on the first processing element and the second processing element, composing (104) a network element,
in response to a network operator requesting (110) a service, deploying (105) the service on the network element, and
operating (106) the service.

10. A device according to claim 9, **characterized in that** the device comprises at least one of the following.:
the first processing element,
the second processing element, and
the network element.
